# EUROPEAN PATENT APPLICATION

(11) **EP 4 679 856 A1**
(43) Date of publication of application: **14.01.2026**
(21) Application number: 23889849.8
(22) Date of filing: 03.10.2023
(51) Int. Cl.: H04Q 9/00, D06F 33/30

(54) **REMOTE CONTROL SYSTEM, REMOTE CONTROL METHOD, AND PROGRAM**

(30) Priority: 03.03.2023 JP 2023032632
(71) Applicant: Panasonic Intellectual Property Management Co., Ltd., Kadoma-shi, Osaka 571-0057 (JP)
(72) Inventor: NISHIMURA, Ryo, Kadoma-shi, Osaka 571-0057 (JP); KAWAGUCHI, Shinusuke, Kadoma-shi, Osaka 571-0057 (JP)
(74) Representative: Novagraaf International SA
(86) International application number: PCT/JP2023/036086
(87) International publication number: WO 2024/185181

(57) **Abstract**

A remote control system (1) includes an appliance (30), a first terminal (10), a second terminal (20), and a notification management device (50) that stores appliance identification information in association with first terminal information and second terminal information. The appliance (30) includes a beacon transmitter (32) that transmits a beacon including first appliance information. The first terminal (10) includes a beacon receiver (12), a remote controller (11), and a first information transmitter (13) that transmits a beacon received signal strength, the first terminal information, and the first appliance information to the notification management device (50). The second terminal (20) includes a beacon receiver (22), a remote controller (21), and a second information transmitter (23) that transmits a beacon received signal strength, the second terminal information, and the first appliance information to the notification management device (50). The notification management device (50) transmits a notification signal including remote controller activation information to only one of the first terminal (10) and the second terminal (20) that has a higher received signal strength.

## Description

### [Technical Field]

The present disclosure relates to a remote control system, a remote control method, and a program.

### [Background Art]

A system is known that transmits a signal related to remote control of an appliance to a terminal to thus improve the convenience of remote control of the appliance by the terminal (for example, Patent Literature (PTL) 1).

### [Citation List]

### [Patent Literature]

[PTL 1]
Japanese Unexamined Patent Application Publication No. 2022-97941

### [Summary of Invention]

### [Technical Problem]

In the case where the system includes a plurality of terminals, if a signal related to remote control of the appliance is transmitted to all of the plurality of terminals, a conflict of a plurality of remote controls may be caused by the plurality of terminals transmitting signals for remotely controlling the appliance.

The present disclosure provides a remote control system, etc. that, when there are a plurality of terminals that remotely control an appliance, notify an appropriate terminal of information related to remote control of the appliance.

### [Solution to Problem]

A remote control system according to the present disclosure is a remote control system that remotely controls an appliance, the remote control system including: the appliance; a first terminal and a second terminal that remotely control the appliance; and a notification management device including a storage that stores appliance identification information for identifying the appliance in association with each of first terminal information related to the first terminal and second terminal information related to the second terminal, wherein the appliance includes a beacon transmitter that wirelessly transmits a beacon including first appliance information related to the appliance, the first terminal includes: a beacon receiver that wirelessly receives the beacon; a remote controller that remotely controls the appliance; and a first information transmitter that transmits a received signal strength of the beacon at the first terminal, the first terminal information, and the first appliance information to the notification management device, the second terminal includes: the beacon receiver; the remote controller; and a second information transmitter that transmits a received signal strength of the beacon at the second terminal, the second terminal information, and the first appliance information to the notification management device, the appliance identification information includes the first appliance information, and the notification management device further includes a notification signal transmitter that transmits a notification signal including activation information of the remote controller, to only one of the first terminal and the second terminal that has a higher received signal strength of the beacon.

These general and specific aspects may be implemented using a system, a device, an integrated circuit, a computer program, or a computer-readable recording medium such as CD-ROM, or any combination of a system, a device, an integrated circuit, a computer program, and a recording medium.

### [Advantageous Effects of Invention]

According to the present disclosure, it is possible to provide a remote control system, etc. that, when there are a plurality of terminals that remotely control an appliance, notify an appropriate terminal of information related to remote control of the appliance.

### [Brief Description of Drawings]

[FIG. 1]

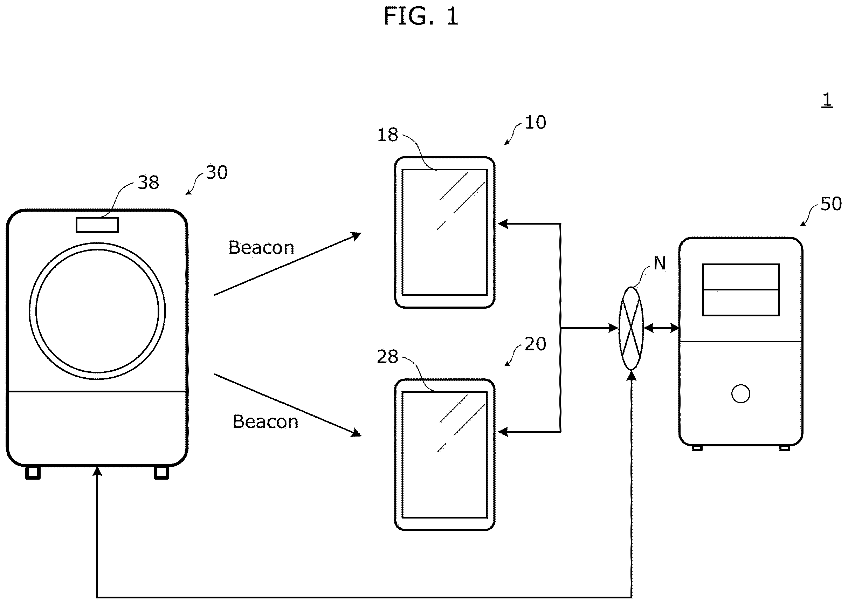

   FIG. 1 is a diagram schematically illustrating the structure of a remote control system according to Embodiment 1.
[FIG. 2]

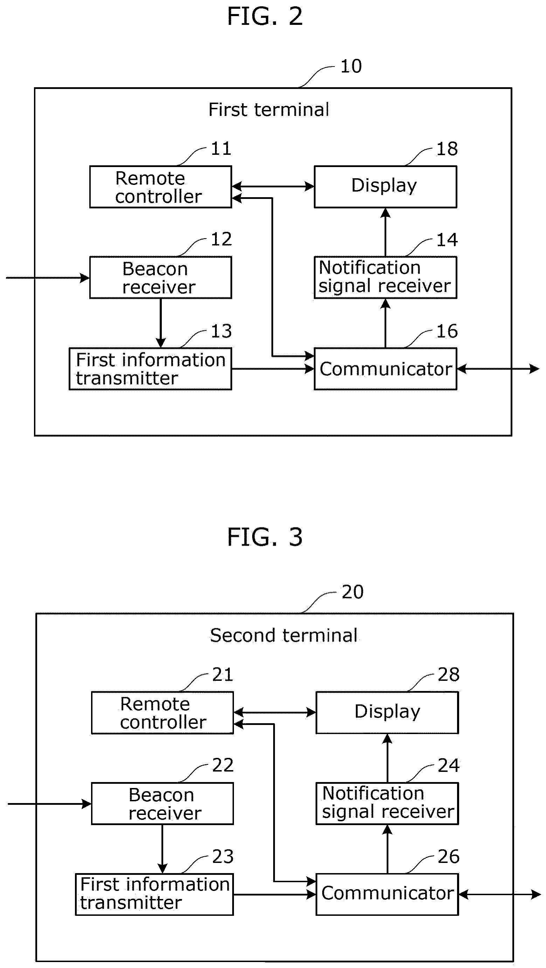

   FIG. 2 is a block diagram illustrating the functional structure of a first terminal according to Embodiment 1.
[FIG. 3]
   FIG. 3 is a block diagram illustrating the functional structure of a second terminal according to Embodiment 1.
[FIG. 4]

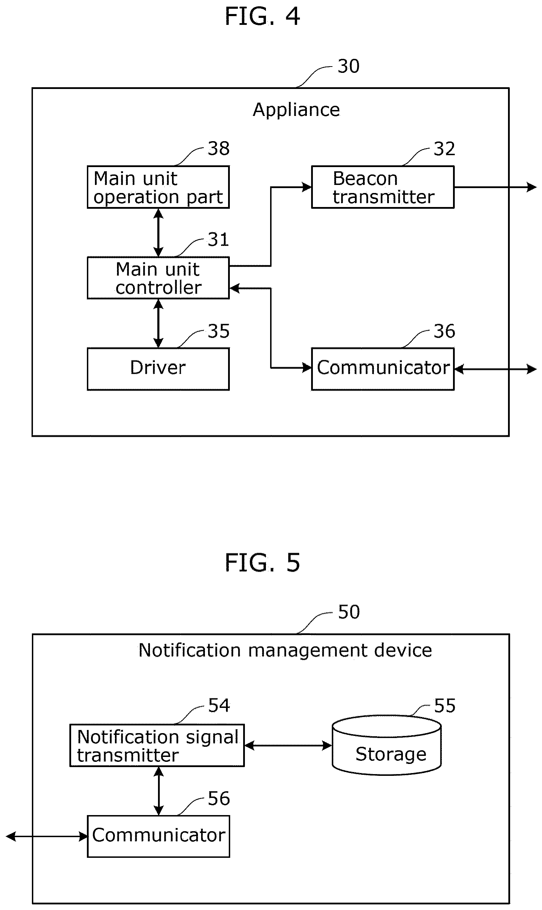

   FIG. 4 is a block diagram illustrating the functional structure of an appliance according to Embodiment 1.
[FIG. 5]
   FIG. 5 is a block diagram illustrating the functional structure of a notification management device according to Embodiment 1.
[FIG. 6]

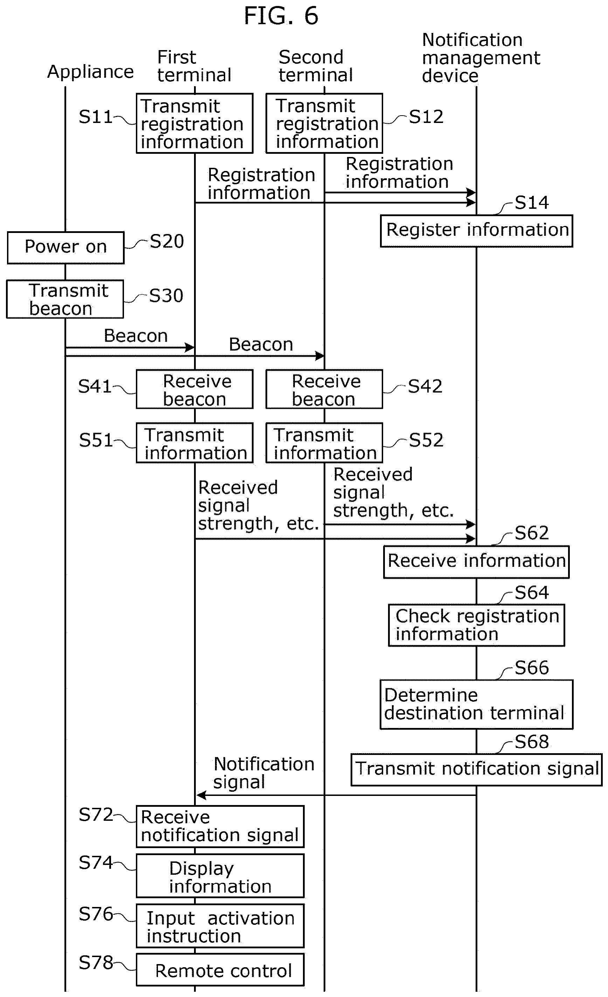

   FIG. 6 is a sequence diagram illustrating a remote control method according to Embodiment 1.
[FIG. 7]

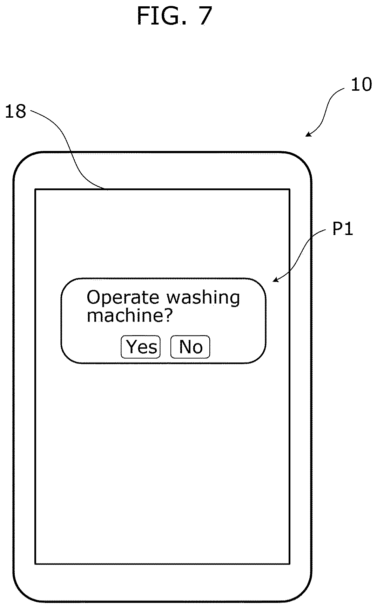

   FIG. 7 is a schematic diagram illustrating an example of a notification displayed on a display according to Embodiment 1.
[FIG. 8]

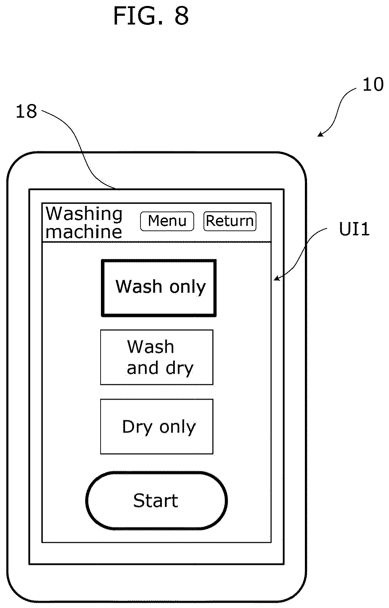

   FIG. 8 is a schematic diagram illustrating an example of a remote operation screen according to Embodiment 1.
[FIG. 9]

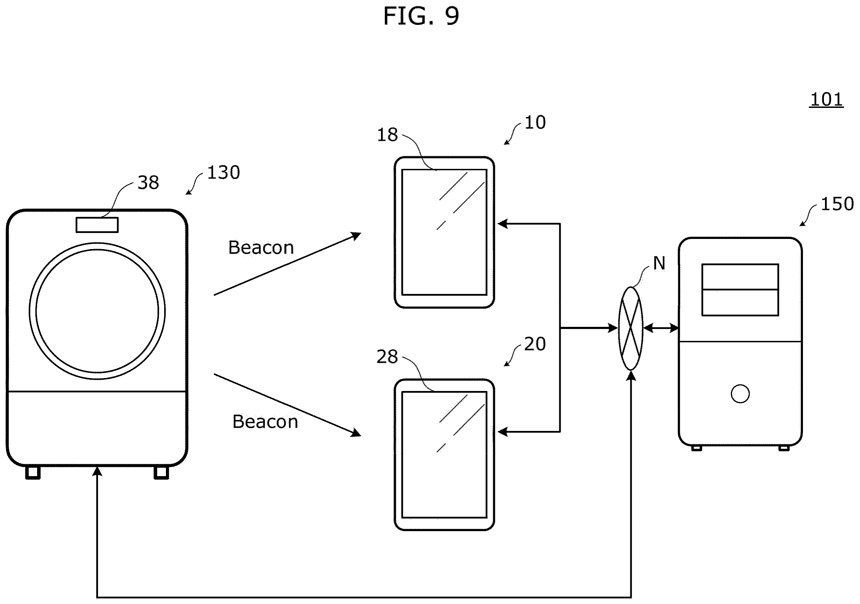

   FIG. 9 is a diagram schematically illustrating the structure of a remote control system according to Embodiment 2.
[FIG. 10]

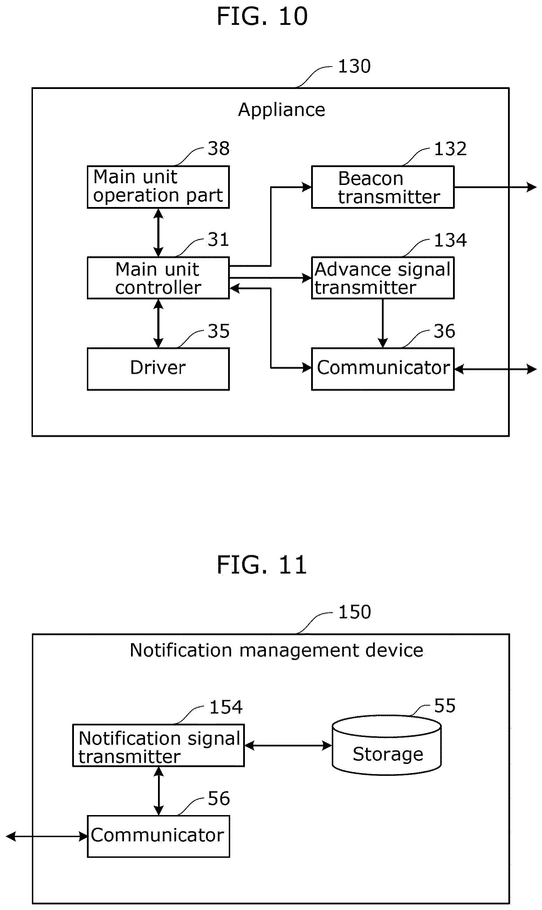

   FIG. 10 is a block diagram illustrating the functional structure of an appliance according to Embodiment 2.
[FIG. 11]
   FIG. 11 is a block diagram illustrating the functional structure of a notification management device according to Embodiment 2.
[FIG. 12]

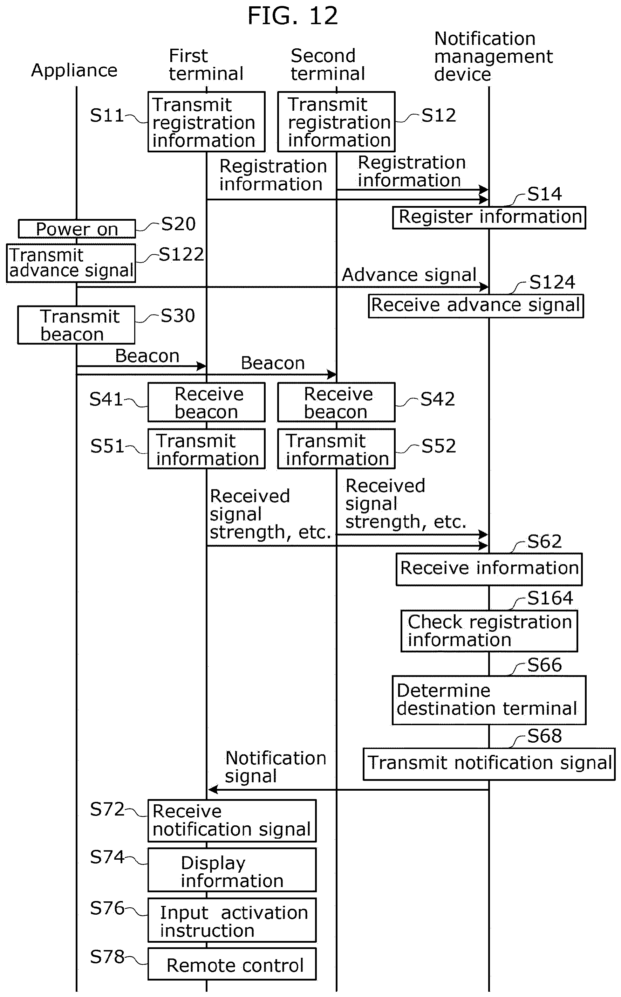

   FIG. 12 is a sequence diagram illustrating a remote control method according to Embodiment 2.

### [Description of Embodiments]

The following will describe examples of inventions obtained from the disclosure of this specification, and the effects, etc. achieved by such inventions.

(1) A remote control system that remotely controls an appliance, the remote control system including: the appliance; a first terminal and a second terminal that remotely control the appliance; and a notification management device including a storage that stores appliance identification information for identifying the appliance in association with each of first terminal information related to the first terminal and second terminal information related to the second terminal, wherein the appliance includes a beacon transmitter that wirelessly transmits a beacon including first appliance information related to the appliance, the first terminal includes: a beacon receiver that wirelessly receives the beacon; a remote controller that remotely controls the appliance; and a first information transmitter that transmits a received signal strength of the beacon at the first terminal, the first terminal information, and the first appliance information to the notification management device, the second terminal includes: the beacon receiver; the remote controller; and a second information transmitter that transmits a received signal strength of the beacon at the second terminal, the second terminal information, and the first appliance information to the notification management device, the appliance identification information includes the first appliance information, and the notification management device further includes a notification signal transmitter that transmits a notification signal including activation information of the remote controller, to only one of the first terminal and the second terminal that has a higher received signal strength of the beacon.

According to this aspect, the notification management device determines the terminal to which the notification signal is to be transmitted, based on the received signal strength of the beacon, which is transmitted by the appliance, at each terminal. Hence, the notification management device can transmit the notification signal to a terminal carried by a user who is near the appliance, that is, a user who is likely to operate the appliance. It is therefore possible to notify an appropriate terminal of information related to remote control of the appliance.

(2) The remote control system according to (1), wherein the first appliance information includes the appliance identification information.

According to this aspect, when another appliance of the same model as the appliance is located near remote control system 1, remotely controlling the other appliance by mistake can be prevented.

(3) The remote control system according to (1), wherein the first appliance information is appliance model information indicating a model of the appliance, and the appliance includes an advance signal transmitter that transmits an advance signal including the appliance identification information to the notification management device within a predetermined period of time before a timing of transmitting the beacon.

According to this aspect, the information amount of the first appliance information included in the beacon can be reduced. Hence, even when the beacon cannot include the appliance identification information due to the payload length limit of the beacon, the beacon can include the first appliance information consisting of the appliance model information. Moreover, as a result of the appliance transmitting the advance signal including the appliance identification information to notification management device 150 before transmitting the beacon, appliance 130 as an object of remote control by each terminal that receives the beacon can be identified. Therefore, for example, when another appliance of the same model as appliance 130 is located near appliance 130, transmitting, by mistake, the notification signal to a terminal carried by a user of the other appliance can be prevented.

(4) The remote control system according to any of (1) to (3), wherein the first terminal information is first user information that is identification information of a user of the first terminal, and the second terminal information is second user information that is identification information of a user of the second terminal.
(5) The remote control system according to any of (1) to (4), wherein each of the first terminal and the second terminal includes: a display that displays information; and a notification signal receiver that causes the display to display information related to the activation information in response to receiving the notification signal.

According to this aspect, the user carrying the terminal that has received the notification signal can easily activate the remote controller using the information related to the activation information displayed on the display. The user can thus easily start remote control of the appliance.

(6) The remote control system according to any of (1) to (5), wherein the appliance includes a main unit operation part that is a user interface for operating the appliance, each of the first terminal and the second terminal includes a display that displays information, the remote controller causes the display to display a remote operation screen that is a user interface for remotely operating the appliance, and the remote operation screen includes more detailed operation items than the main unit operation part.

According to this aspect, the user can use detailed operation items using the remote operation screen, while the structure of the main unit operation part in the appliance is simplified.

(7) The remote control system according to (6), wherein the main unit operation part includes only an operation item of switching power of the appliance on and off.

According to this aspect, the structure of the appliance can be simplified. Moreover, the appearance of the appliance can be simplified, and the degree of freedom in the appearance of the appliance can be enhanced. The appliance can therefore have excellent design.

(8) A remote control method of remotely controlling an appliance using a notification management device and either a first terminal or a second terminal, each of the first terminal and the second terminal including a remote controller that remotely controls the appliance, the notification management device including a storage that stores appliance identification information for identifying the appliance in association with each of first terminal information related to the first terminal and second terminal information related to the second terminal, the remote control method including: wirelessly transmitting, by the appliance, a beacon including first appliance information related to the appliance; wirelessly receiving the beacon by the first terminal and the second terminal; transmitting, by the first terminal, a received signal strength of the beacon at the first terminal, the first terminal information related to the first terminal, and the first appliance information to the notification management device, and transmitting, by the second terminal, a received signal strength of the beacon at the second terminal, the second terminal information related to the second terminal, and the first appliance information to the notification management device; and transmitting, by the notification management device, a notification signal including activation information of the remote controller, to only one of the first terminal and the second terminal that has a higher received signal strength of the beacon, wherein the appliance identification information includes the first appliance information.

According to this aspect, the same effects as the above-described remote control system can be achieved.

(9) A program for causing a computer to execute the remote control method according to (8).

According to this aspect, the same effects as the above-described remote control system can be achieved.

These general and specific aspects may be implemented using a system, a device, an integrated circuit, a computer program, or a computer-readable recording medium such as CD-ROM, or any combination of a system, a device, an integrated circuit, a computer program, and a recording medium.

Embodiments will be described in detail below, by referring to drawings as appropriate. Herein, description detailed more than necessary may be omitted. For example, detailed description of well-known matters or repeated description of the substantially same structures may be omitted. This is to avoid unnecessarily redundant description and facilitate the understanding of a person skilled in the art.

The accompanying drawings and the following description are provided to help a person skilled in the art to fully understand the present disclosure, and are not intended to limit the subject matter defined in the appended claims.

### [Embodiment 1]

A remote control system, a remote control method, and a program according to Embodiment 1 will be described below.

### [1-1. Remote control system]

First, the remote control system according to this embodiment will be described with reference to FIGS. 1 to 5. FIG. 1 is a diagram schematically illustrating the structure of remote control system 1 according to this embodiment. FIG. 2 is a block diagram illustrating the functional structure of first terminal 10 according to this embodiment. FIG. 3 is a block diagram illustrating the functional structure of second terminal 20 according to this embodiment. FIG. 4 is a block diagram illustrating the functional structure of appliance 30 according to this embodiment. FIG. 5 is a block diagram illustrating the functional structure of notification management device 50 according to this embodiment.

Remote control system 1 according to this embodiment is a system that remotely controls appliance 30 using a terminal. Remote control system 1 includes appliance 30, first terminal 10, second terminal 20, and notification management device 50, as illustrated in FIG. 1. Although FIG. 1 illustrates a structure example in which remote control system 1 includes two terminals, first terminal 10 and second terminal 20, remote control system 1 may include three or more terminals.

Each of first terminal 10 and second terminal 20 is a terminal that remotely controls appliance 30. Each of first terminal 10 and second terminal 20 is a mobile terminal, such as a smartphone, a tablet, or a personal computer.

First terminal 10 includes remote controller 11, beacon receiver 12, first information transmitter 13, notification signal receiver 14, communicator 16, and display 18, as illustrated in FIG. 2.

Remote controller 11 is a processing unit that remotely controls appliance 30. Remote controller 11 can be implemented using, for example, a processor (for example, a central processing unit (CPU)) and memory. Specifically, remote controller 11 is implemented by a processor executing an application program that controls appliance 30 using memory. Each of the below-described processing units in remote control system 1 is implemented by a processor executing a predetermined program using memory, as with remote controller 11.

In this embodiment, remote controller 11 remotely controls appliance 30 via communicator 16, network N, and notification management device 50. Remote controller 11 may remotely control appliance 30 directly by use of short-range wireless communication such as Bluetooth (registered trademark) Low Energy (BLE).

When activated, remote controller 11 causes display 18 to display a remote operation screen that is a user interface for remotely operating appliance 30. The remote operation screen will be described later.

Beacon receiver 12 is a processing unit that receives a beacon wirelessly transmitted (i.e. issued) by appliance 30. The communication standard of wireless communication used in receiving the beacon is not limited. In this embodiment, beacon receiver 12 uses BLE. In this embodiment, beacon receiver 12 has a communication interface of BLE, for example. Alternatively, beacon receiver 12 may have no communication interface. In this case, for example, beacon receiver 12 may receive the beacon via communicator 16 and the like. Beacon receiver 12 outputs information included in the beacon and the received signal strength (RSSI) of the beacon to first information transmitter 13.

First information transmitter 13 is a processing unit that transmits the received signal strength of the beacon at first terminal 10, first terminal information, and first appliance information to notification management device 50. In this embodiment, first information transmitter 13 transmits these information to notification management device 50 via communicator 16 and network N.

The first terminal information is information related to first terminal 10. The first terminal information is not limited as long as it is information that can specify first terminal 10. In this embodiment, the first terminal information is first user information that is identification information of the user of first terminal 10. Specifically, a user identification number unique to the user may be used.

The first appliance information is information related to appliance 30, and is included in the beacon transmitted by appliance 30. The first appliance information is stored in notification management device 50 in association with the first terminal information and the below-described second terminal information. In this embodiment, the first appliance information is appliance identification information for identifying appliance 30. The appliance identification information is not limited as long as it is unique information that can identify appliance 30. As the appliance identification information, for example, the manufacturing number (i.e. serial number) of appliance 30 may be used.

Display 18 displays information. As display 18, for example, a display panel that displays images may be used. More specific examples of display 18 include a liquid crystal display panel and an organic electroluminescence (EL) display panel. In this embodiment, display 18 also serves as an input unit that receives user input. Specifically, display 18 is a touch panel.

Notification signal receiver 14 is a processing unit that causes display 18 to display information related to activation information of remote controller 11 in response to receiving a notification signal from notification management device 50. In this embodiment, notification signal receiver 14 causes display 18 to display a push notification that includes the information related to the activation information of remote controller 11. Specific examples of the push notification will be described later.

Communicator 16 is a communication interface that performs communication, and includes an antenna, a wireless circuit, and the like. The communication interface in communicator 16 is not limited. In this embodiment, communicator 16 has a communication interface of a wireless LAN and communicates with notification management device 50 using the wireless LAN. Communicator 16 may have a communication interface of BLE, for example. In this case, beacon receiver 12 may receive the beacon via communicator 16.

Second terminal 20 includes remote controller 21, beacon receiver 22, second information transmitter 23, notification signal receiver 24, communicator 26, and display 28, as illustrated in FIG. 3.

Remote controller 21 is a processing unit that remotely controls appliance 30, and has the same structure as remote controller 11 in first terminal 10.

Beacon receiver 22 is a processing unit that receives the beacon wirelessly transmitted by appliance 30, and has the same structure as beacon receiver 12 in first terminal 10.

Second information transmitter 23 is a processing unit that transmits the received signal strength of the beacon at second terminal 20, the second terminal information, and the first appliance information to notification management device 50. In this embodiment, second information transmitter 23 transmits these information to notification management device 50 via communicator 26 and network N.

The second terminal information is information related to second terminal 20. The second terminal information is not limited as long as it is information that can specify second terminal 20. In this embodiment, the second terminal information is second user information that is identification information of the user of second terminal 20. Specifically, a user identification number unique to the user may be used.

Display 28 displays information. Display 28 has the same structure as display 18 in first terminal 10.

Notification signal receiver 24 is a processing unit that causes display 28 to display information related to activation information of remote controller 21 in response to receiving a notification signal from notification management device 50, and has the same structure as notification signal receiver 14 in first terminal 10.

Communicator 26 is a communication interface that performs communication, and includes an antenna, a wireless circuit, and the like. Communicator 26 has the same structure as communicator 16 in first terminal 10.

Appliance 30 is an object of control by remote control system 1. Appliance 30 is, for example, a home appliance, although not limited to such. Specific examples of appliance 30 include a washing machine, a refrigerator, an air conditioner, a refrigerator, a microwave oven, a television receiver, a recording device, and an intercom. In this embodiment, appliance 30 is a washing machine.

Appliance 30 includes main unit controller 31, beacon transmitter 32, driver 35, communicator 36, and main unit operation part 38, as illustrated in FIG. 4.

Main unit operation part 38 is a user interface for operating appliance 30. Main unit operation part 38 includes one or more predetermined operation items. In this embodiment, main unit operation part 38 includes only an operation item of switching the power of appliance 30 on and off. This can simplify the structure of appliance 30. Moreover, the appearance of appliance 30 can be simplified, and the degree of freedom in the appearance of appliance 30 can be enhanced. Appliance 30 can therefore have excellent design. Detailed operation settings for appliance 30 can be performed by first terminal 10 and second terminal 20.

Main unit controller 31 is a processing unit that performs overall control of appliance 30. Main unit controller 31 controls beacon transmitter 32, driver 35, etc. based on signals from main unit operation part 38 and remote operation signals received via communicator 36.

Driver 35 drives appliance 30. When appliance 30 is a washing machine as in this embodiment, driver 35 performs, for example, an operation of rotating the drum of the washing machine.

Beacon transmitter 32 is a processing unit that wirelessly transmits the beacon including the first appliance information related to appliance 30. The communication standard of wireless communication used in transmitting the beacon is not limited. In this embodiment, beacon transmitter 32 uses BLE. In this embodiment, beacon transmitter 32 has a communication interface of BLE, for example. Alternatively, beacon transmitter 32 may have no communication interface. In this case, for example, beacon transmitter 32 may transmit the beacon via communicator 36 and the like. In this embodiment, the first appliance information included in the beacon is identification information for identifying appliance 30, as mentioned above.

For example, beacon transmitter 32 may transmit the beacon based on a signal input from main unit controller 31. For example, beacon transmitter 32 may transmit the beacon in response to the user performing some operation on main unit operation part 38 in appliance 30, or periodically transmit the beacon.

Communicator 36 is a communication interface that performs communication, and includes an antenna, a wireless circuit, and the like. The communication interface in communicator 36 is not limited. In this embodiment, communicator 36 has a communication interface of a wireless LAN and communicates with notification management device 50 using the wireless LAN. Communicator 36 may have a communication interface of BLE, for example. In this case, beacon transmitter 32 may transmit the beacon via communicator 36.

Notification management device 50 is a device that transmits a notification signal to first terminal 10 or second terminal 20. Notification management device 50 includes notification signal transmitter 54, storage 55, and communicator 56, as illustrated in FIG. 5. Notification management device 50 is implemented by a computer, for example.

Storage 55 stores the appliance identification information for identifying appliance 30 in association with each of the first terminal information related to first terminal 10 and the second terminal information related to second terminal 20. In this embodiment, storage 55 stores, as the first terminal information, the first user information that is the identification information of the user of first terminal 10, and stores, as the second terminal information, the second user information that is the identification information of the user of second terminal 20. The appliance identification information includes the first appliance information included in the beacon. In this embodiment, the first appliance information is the appliance identification information. The appliance identification information and the first terminal information are stored in storage 55, for example, as a result of the user of first terminal 10 registering these information at notification management device 50 using first terminal 10. Remote controller 11 in first terminal 10 may have a function of performing such registration. The appliance identification information and the second terminal information are stored in storage 55, for example, as a result of the user of second terminal 20 registering these information at notification management device 50 using second terminal 20. Remote controller 21 in second terminal 20 may have a function of performing such registration.

Notification signal transmitter 54 is a processing unit that receives the signals transmitted from first terminal 10 and second terminal 20 and transmits, to only one of first terminal 10 and second terminal 20 that has the higher received signal strength of the beacon, a notification signal including the activation information of remote controller 11 or remote controller 21. Notification signal transmitter 54 does not transmit the notification signal to first terminal 10 when the first terminal information and the appliance identification information transmitted from first terminal 10 are not stored in storage 55 in association with each other. Notification signal transmitter 54 does not transmit the notification signal to second terminal 20 when the second terminal information and the appliance identification information transmitted from second terminal 20 are not stored in storage 55 in association with each other.

Communicator 56 is a communication interface that performs communication. The communication interface in communicator 56 is not limited. In this embodiment, communicator 56 communicates with first terminal 10, second terminal 20, and appliance 30 via network N.

### [1-2. Remote control method]

The remote control method according to this embodiment will be described with reference to FIG. 6. FIG. 6 is a sequence diagram illustrating the remote control method according to this embodiment. The remote control method according to this embodiment is a method of remotely controlling appliance 30 using notification management device 50 and either first terminal 10 or second terminal 20.

As illustrated in FIG. 6, first, information on appliance 30, first terminal 10, and second terminal 20 is registered at notification management device 50, in preparation for remote control. Specifically, first terminal 10 transmits registration information such as the first terminal information and the appliance identification information of appliance 30 to notification management device 50 (registration information transmission step S11), and second terminal 20 transmits the second terminal information and the appliance identification information of appliance 30 to notification management device 50 (registration information transmission step S12).

Subsequently, notification management device 50, having received the registration information transmitted from first terminal 10 and second terminal 20, registers the registration information (registration step S14). Specifically, notification management device 50 stores the appliance identification information in association with each of the first terminal information and the second terminal information in storage 55.

Subsequently, the user switches the power of appliance 30 from off to on (power operation step S20). Specifically, the user switches on the power using main unit operation part 38 in appliance 30. As an example, control in the case where the user carrying first terminal 10 (i.e. the user corresponding to the first user information) switches on the power of appliance 30 will be described below.

Subsequently, beacon transmitter 32 wirelessly transmits a beacon including the first appliance information (beacon transmission step S30). Specifically, having received a signal indicating that the power has been switched on, main unit controller 31 in appliance 30 outputs a signal instructing beacon transmitter 32 to transmit the beacon. Having received the signal, beacon transmitter 32 transmits the beacon.

Subsequently, first terminal 10 and second terminal 20 located near appliance 30 wirelessly receive the beacon (beacon reception steps S41 and S42). Although this embodiment describes an example in which only two terminals receive the beacon, three or more terminals may receive the beacon.

Subsequently, first terminal 10 transmits the received signal strength of the beacon at first terminal 10, the first terminal information, and the first appliance information to notification management device 50 (information transmission step S51), and second terminal 20 transmits the received signal strength of the beacon at second terminal 20, the second terminal information, and the first appliance information to notification management device 50 (information transmission step S52).

Subsequently, notification management device 50 receives the information transmitted from first terminal 10 and second terminal 20 (information reception step S62). Specifically, after receiving information from one terminal, notification management device 50 receives information from another terminal until a predetermined period of time has elapsed.

Subsequently, notification signal transmitter 54 in notification management device 50 compares the information transmitted from first terminal 10 and second terminal 20 with the information stored in storage 55, and checks whether these information match (registration information checking step S64). Registration information checking step S64 may be executed in parallel with information reception step S62. For example, in the period during which notification signal transmitter 54 waits for receiving information from another terminal in information reception step S62, registration information checking step S64 may be executed for already received information.

Notification signal transmitter 54 in notification management device 50 causes storage 55 to store only a terminal (or terminals) whose transmitted information matches the information stored in storage 55 out of first terminal 10 and second terminal 20, as a candidate for the destination of the notification signal. In the case where neither the information transmitted from first terminal 10 nor the information transmitted from second terminal 20 matches the information stored in storage 55, the control ends. The following will describe the case where both the information transmitted from first terminal 10 and the information transmitted from second terminal 20 match the information stored in storage 55.

Subsequently, notification signal transmitter 54 in notification management device 50 determines a terminal (destination terminal) to which the notification signal including the activation information of remote controller 11 or 21 is to be transmitted (destination terminal determination step S66). In this embodiment, one of first terminal 10 and second terminal 20 that has the higher received signal strength of the beacon is determined as the destination terminal. Here, since the user carrying first terminal 10 operates main unit operation part 38 in appliance 30, first terminal 10 is located closer to appliance 30 than second terminal 20 is. Therefore, the received signal strength of the beacon at first terminal 10 is higher than the received signal strength of the beacon at second terminal 20. Notification signal transmitter 54 in notification management device 50 accordingly determines first terminal 10 as the destination terminal of the notification signal. When remote control system 1 includes three or more terminals, one of the three or more terminals that has the highest received signal strength of the beacon is determined as the destination terminal.

Subsequently, notification signal transmitter 54 in notification management device 50 transmits the notification signal including the activation information of remote controller 11 or 21 to only one of first terminal 10 and second terminal 20 that has the higher received signal strength of the beacon (notification signal transmission step S68). In the example illustrated in FIG. 6, the notification signal is transmitted to first terminal 10.

Subsequently, first terminal 10 or second terminal 20 receives the notification signal (notification signal reception step S72). In the example illustrated in FIG. 6, notification signal receiver 14 in first terminal 10 receives the notification signal.

Subsequently, notification signal receiver 14 in first terminal 10 causes display 18 to display information related to the activation information of remote controller 11 (information display step S74). The information displayed on display 18 will be described with reference to FIG. 7. FIG. 7 is a schematic diagram illustrating an example of a notification displayed on display 18 according to this embodiment. As illustrated in FIG. 7, notification P1 is displayed on display 18 in first terminal 10. Notification P1 may be a push notification. In this embodiment, since appliance 30 is a washing machine as an example, notification P1 indicating the message "Operate washing machine?" is displayed on display 18 in FIG. 7. Notification P1 also indicates the buttons "Yes" and "No." For example, the button "Yes" is associated with the activation information of remote controller 11, and remote controller 11 is activated in response to the user tapping the button. For example, the button "No" is associated with the operation of ending notification P1, and notification P1 is closed in response to the user tapping the button.

Subsequently, the user inputs a signal instructing the activation of remote controller 11 to first terminal 10 (activation instruction input step S76). For example, as a result of the user tapping the button "Yes" illustrated in FIG. 7, the signal instructing the activation of remote controller 11 is input to display 18 in first terminal 10.

Subsequently, remote controller 11 in first terminal 10 remotely controls appliance 30 (remote control step S78). For example, when the user taps the button "Yes" illustrated in FIG. 7, remote controller 11 is activated, and remote controller 11 causes display 18 to display a remote operation screen that is a user interface for remotely operating appliance 30. The remote operation screen will be described with reference to FIG. 8. FIG. 8 is a schematic diagram illustrating an example of remote operation screen UI1 according to this embodiment.

As illustrated in FIG. 8, operation items for remotely operating appliance 30 are displayed on remote operation screen UI1. For example, tapping the button "Wash only" in FIG. 8 can select a wash only operation as the operation of appliance 30. Following this, tapping the button "Start" in FIG. 8 can start the wash operation of appliance 30. Specifically, first terminal 10 transmits a remote control signal to appliance 30, and main unit controller 31 in appliance 30 controls driver 35 based on the remote control signal.

Tapping the button "Menu" on remote operation screen UI1 in FIG. 8 can display, for example, a more detailed setting screen for washing, drying, etc., allowing the user to make detailed settings. Remote operation screen UI1 may thus include more detailed operation items than main unit operation part 38. In this way, the user can use detailed operation items while the structure of main unit operation part 38 in appliance 30 is simplified.

Thus, appliance 30 can be remotely controlled by first terminal 10.

### [1-3. Effects, etc.]

As described above, in remote control system 1 according to this embodiment, notification management device 50 includes notification signal transmitter 54 that transmits a notification signal including the activation information of the remote controller to only one of first terminal 10 and second terminal 20 that has the higher received signal strength of the beacon.

Thus, in remote control system 1 according to this embodiment, notification management device 50 determines the terminal to which the notification signal is to be transmitted, based on the received signal strength of the beacon, which is transmitted by appliance 30, at each terminal. Hence, notification management device 50 can transmit the notification signal to a terminal carried by a user who is near appliance 30, that is, a user who is likely to operate appliance 30. Remote control system 1 according to this embodiment can therefore notify an appropriate terminal of information related to remote control of appliance 30.

In remote control system 1, the first appliance information included in the beacon may be appliance identification information for identifying appliance 30.

Thus, when another appliance of the same model as appliance 30 is located near remote control system 1, remotely controlling the other appliance by mistake can be prevented.

In remote control system 1, the first terminal information may be first user information that is identification information of a user of first terminal 10, and the second terminal information may be second user information that is identification information of a user of second terminal 20.

In remote control system 1, each of first terminal 10 and second terminal 20 may include: a display that displays information; and a notification signal receiver that causes the display to display information related to the activation information in response to receiving the notification signal.

Thus, the user carrying the terminal that has received the notification signal can easily activate the remote controller using the information related to the activation information displayed on the display. The user can thus easily start remote control of appliance 30.

In remote control system 1, appliance 30 may include main unit operation part 38 that is a user interface for operating appliance 30. Each of first terminal 10 and second terminal 20 may include a display that displays information. The remote controller may cause the display to display remote operation screen UI1 that is a user interface for remotely operating appliance 30. Remote operation screen UI1 may include more detailed operation items than main unit operation part 38.

Thus, the user can use detailed operation items using remote operation screen UI1, while the structure of main unit operation part 38 in appliance 30 is simplified.

In remote control system 1, main unit operation part 38 may include only an operation item of switching power of appliance 30 on and off.

Thus, the structure of appliance 30 can be simplified. Moreover, the appearance of appliance 30 can be simplified, and the degree of freedom in the appearance of appliance 30 can be enhanced. Appliance 30 can therefore have excellent design.

The remote control method according to this embodiment is a method of remotely controlling appliance 30 using notification management device 50 and either first terminal 10 or second terminal 20. The remote control method includes: beacon transmission step S30 of wirelessly transmitting, by appliance 30, a beacon including first appliance information related to appliance 30; beacon reception steps S41 and S42 of wirelessly receiving the beacon by first terminal 10 and second terminal 20; information transmission steps S51 and S52 of transmitting, by first terminal 10, a received signal strength of the beacon at first terminal 10, first terminal information related to first terminal 10, and the first appliance information to notification management device 50, and transmitting, by second terminal 20, a received signal strength of the beacon at second terminal 20, second terminal information related to second terminal 20, and the first appliance information to notification management device 50; and notification signal transmission step S68 of transmitting, by notification management device 50, a notification signal including activation information of the remote controller, to only one of first terminal 10 and second terminal 20 that has a higher received signal strength of the beacon. The appliance identification information includes the first appliance information.

Thus, the same effects as remote control system 1 can be achieved.

The program according to this embodiment is a program for causing a computer to execute the above-described remote control method.

Thus, the same effects as remote control system 1 can be achieved.

### [Embodiment 2]

A remote control system, a remote control method, and a program according to Embodiment 2 will be described below. The remote control system according to this embodiment differs from remote control system 1 according to Embodiment 1 mainly in the information included in the beacon. This embodiment will be described below, focusing on the differences from Embodiment 1.

### [2-1. Remote control system]

The remote control system according to this embodiment will be described with reference to FIGS. 9 to 11. FIG. 9 is a diagram schematically illustrating the structure of remote control system 101 according to this embodiment. FIG. 10 is a block diagram illustrating the functional structure of appliance 130 according to this embodiment. FIG. 11 is a block diagram illustrating the functional structure of notification management device 150 according to this embodiment.

Remote control system 101 according to this embodiment includes appliance 130, first terminal 10, second terminal 20, and notification management device 150, as illustrated in FIG. 9.

Appliance 130 according to this embodiment includes main unit controller 31, beacon transmitter 132, driver 35, communicator 36, main unit operation part 38, and advance signal transmitter 134, as illustrated in FIG. 10.

Beacon transmitter 132 according to this embodiment wirelessly transmits a beacon including first appliance information related to appliance 130, as with beacon transmitter 32 according to Embodiment 1. In this embodiment, the first appliance information is not information unique to appliance 130, such as appliance identification information. In this embodiment, the first appliance information is appliance model information indicating the model of appliance 130. Thus, the information amount of the first appliance information can be reduced. Hence, even when the beacon cannot include the appliance identification information due to the payload length limit of the beacon, the beacon can include the first appliance information consisting of the appliance model information.

Advance signal transmitter 134 is a processing unit that transmits an advance signal including appliance identification information to notification management device 150 within a predetermined period of time before the timing at which beacon transmitter 132 transmits the beacon. In this embodiment, advance signal transmitter 134 transmits the advance signal including the appliance identification information to notification management device 150 via communicator 36 and network N.

Notification management device 150 according to this embodiment is a device that transmits a notification signal to first terminal 10 or second terminal 20, as with notification management device 50 according to Embodiment 1. Notification management device 150 includes notification signal transmitter 154, storage 55, and communicator 56, as illustrated in FIG. 11.

Notification signal transmitter 154 according to this embodiment receives the advance signal from appliance 130 and extracts the appliance identification information from the advance signal. Notification signal transmitter 154 also receives the received signal strength of the beacon at first terminal 10, the first terminal information, and the first appliance information transmitted from first terminal 10, and the received signal strength of the beacon at second terminal 20, the second terminal information, and the first appliance information transmitted form second terminal 20. Notification signal transmitter 154 compares the first appliance information received from first terminal 10 and second terminal 20 within the predetermined period of time after receiving the advance signal with the appliance identification information included in the advance signal, and determines whether the first appliance information and the appliance identification information included in the advance signal include the same appliance model information. When the first appliance information and the appliance identification information included in the advance signal include the same appliance model information, notification signal transmitter 154 transmits a notification signal including activation information of the remote controller to only one of first terminal 10 and second terminal 20 that has the higher received signal strength of the beacon.

### [2-2. Remote control method]

The remote control method according to this embodiment will be described with reference to FIG. 12. FIG. 12 is a sequence diagram illustrating the remote control method according to this embodiment.

As illustrated in FIG. 12, first, registration information transmission steps S11 and S12 to power operation step S20 are performed as in the remote control method according to Embodiment 1.

Subsequently, advance signal transmitter 134 in appliance 130 transmits an advance signal including appliance identification information to notification management device 150 (advance signal transmission step S122). More specifically, advance signal transmitter 134 transmits the advance signal to notification management device 150 via communicator 36 and network N.

Subsequently, notification signal transmitter 154 in notification management device 150 receives the advance signal (advance signal reception step S124). More specifically, notification signal transmitter 154 receives the advance signal via communicator 56, and extracts the appliance identification signal of appliance 130.

Subsequently, beacon transmission step S30 to information reception step S62 are performed as in the remote control method according to Embodiment 1.

Subsequently, notification signal transmitter 154 in notification management device 150 compares the information transmitted from first terminal 10 and second terminal 20 with the information stored in storage 55, and checks whether these information match (registration information checking step S164). Notification signal transmitter 154 in notification management device 150 causes storage 55 to store only a terminal (or terminals) whose transmitted information matches the information stored in storage 55 out of first terminal 10 and second terminal 20, as a candidate for the destination of the notification signal. In the case where neither the information transmitted from first terminal 10 nor the information transmitted from second terminal 20 matches the information stored in storage 55, the control ends. The following will describe the case where both the information transmitted from first terminal 10 and the information transmitted from second terminal 20 match the information stored in storage 55.

In registration information checking step S164 according to this embodiment, it is further checked whether the advance signal including the appliance identification signal corresponding to the first appliance information has been received within the predetermined period of time before the start of execution of registration information checking step S164. In the case where such an advance signal has not been received, the control ends. The remote control method in the case where such an advance signal has been received will be described below.

Subsequently, destination terminal determination step S66 to remote control step S78 are performed as in the remote control method according to Embodiment 1.

Thus, appliance 130 can be remotely controlled by first terminal 10.

### [2-3. Effects, etc.]

As described above, in remote control system 101 according to this embodiment, notification management device 150 includes notification signal transmitter 154 that transmits a notification signal including the activation information of the remote controller to only one of first terminal 10 and second terminal 20 that has the higher received signal strength of the beacon, as in remote control system 1 according to Embodiment 1.

Remote control system 101 according to this embodiment therefore has the same effects as remote control system 1 according to Embodiment 1.

In remote control system 101, the first appliance information may be appliance model information indicating a model of appliance 130, and appliance 130 may include an advance signal transmitter that transmits an advance signal including the appliance identification information to notification management device 150 within a predetermined period of time before a timing of transmitting the beacon.

Thus, the information amount of the first appliance information included in the beacon can be reduced. Hence, even when the beacon cannot include the appliance identification information due to the payload length limit of the beacon, the beacon can include the first appliance information consisting of the appliance model information. Moreover, as a result of appliance 130 transmitting the advance signal including the appliance identification information to notification management device 150 before transmitting the beacon, appliance 130 as an object of remote control by each terminal that receives the beacon can be identified. Therefore, for example, when another appliance of the same model as appliance 130 is located near appliance 130, transmitting, by mistake, the notification signal to a terminal carried by a user of the other appliance can be prevented.

The remote control method according to this embodiment includes advance signal transmission step S122 of transmitting, by appliance 130, an advance signal including the appliance identification information to notification management device 150 within a predetermined period of time before a timing of transmitting the beacon.

Thus, the same effects as remote control system 101 can be achieved.

The program according to this embodiment is a program for causing a computer to execute the above-described remote control method.

Thus, the same effects as remote control system 101 can be achieved.

### (Variations, etc.)

The foregoing embodiments have been described to illustrate the presently disclosed techniques, through the detailed description and the accompanying drawings.

The structural elements in the detailed description and the accompanying drawings may include not only the structural elements essential for the solution of the problem but also the structural elements not essential for the solution of the problem, to illustrate the presently disclosed techniques. The inclusion of such optional structural elements in the detailed description and the accompanying drawings therefore does not mean that these optional structural elements are essential structural elements.

For example, although appliance identification information is used as the first appliance information in Embodiment 1, appliance model information or the like may be used as the first appliance information. In other words, the first appliance information may be any information stored in notification management device 50 in association with the first terminal information and the second terminal information.

The foregoing embodiments are intended to be illustrative of the presently disclosed techniques, and therefore various changes, replacements, additions, omissions, etc. can be made within the scope of the appended claims and their equivalents.

### [Industrial Applicability]

The present disclosure can be used, for example, for systems that remotely control appliances such as home appliances.

### [Reference Signs List]

1, 101 remote control system
10 first terminal
11, 21 remote controller
12, 22 beacon receiver
13 first information transmitter
14, 24 notification signal receiver
16, 26, 36, 56 communicator
18, 28 display
20 second terminal
23 second information transmitter
30, 130 appliance
31 main unit controller
32, 132 beacon transmitter
35 driver
38 main unit operation part
50, 150 notification management device
54, 154 notification signal transmitter
55 storage
134 advance signal transmitter
N network
P1 notification
UI1 remote operation screen

## Claims

1. A remote control system that remotely controls an appliance, the remote control system comprising:
the appliance;
a first terminal and a second terminal that remotely control the appliance; and
a notification management device including a storage that stores appliance identification information for identifying the appliance in association with each of first terminal information related to the first terminal and second terminal information related to the second terminal,
wherein the appliance includes a beacon transmitter that wirelessly transmits a beacon including first appliance information related to the appliance,
the first terminal includes:
a beacon receiver that wirelessly receives the beacon;
a remote controller that remotely controls the appliance; and
a first information transmitter that transmits a received signal strength of the beacon at the first terminal, the first terminal information, and the first appliance information to the notification management device,
the second terminal includes:
the beacon receiver;
the remote controller; and
a second information transmitter that transmits a received signal strength of the beacon at the second terminal, the second terminal information, and the first appliance information to the notification management device,
the appliance identification information includes the first appliance information, and
the notification management device further includes a notification signal transmitter that transmits a notification signal including activation information of the remote controller, to only one of the first terminal and the second terminal that has a higher received signal strength of the beacon.

2. The remote control system according to claim 1,
wherein the first appliance information includes the appliance identification information.

3. The remote control system according to claim 1,
wherein the first appliance information is appliance model information indicating a model of the appliance, and
the appliance includes an advance signal transmitter that transmits an advance signal including the appliance identification information to the notification management device within a predetermined period of time before a timing of transmitting the beacon.

4. The remote control system according to any one of claim 1 to claim 3,
wherein the first terminal information is first user information that is identification information of a user of the first terminal, and
the second terminal information is second user information that is identification information of a user of the second terminal.

5. The remote control system according to any one of claim 1 to claim 3,
wherein each of the first terminal and the second terminal includes:
a display that displays information; and
a notification signal receiver that causes the display to display information related to the activation information in response to receiving the notification signal.

6. The remote control system according to any one of claim 1 to claim 3,
wherein the appliance includes a main unit operation part that is a user interface for operating the appliance,
each of the first terminal and the second terminal includes a display that displays information,
the remote controller causes the display to display a remote operation screen that is a user interface for remotely operating the appliance, and
the remote operation screen includes more detailed operation items than the main unit operation part.

7. The remote control system according to claim 6,
wherein the main unit operation part includes only an operation item of switching power of the appliance on and off.

8. A remote control method of remotely controlling an appliance using a notification management device and either a first terminal or a second terminal, each of the first terminal and the second terminal including a remote controller that remotely controls the appliance, the notification management device including a storage that stores appliance identification information for identifying the appliance in association with each of first terminal information related to the first terminal and second terminal information related to the second terminal, the remote control method comprising:
wirelessly transmitting, by the appliance, a beacon including first appliance information related to the appliance;
wirelessly receiving the beacon by the first terminal and the second terminal;
transmitting, by the first terminal, a received signal strength of the beacon at the first terminal, the first terminal information related to the first terminal, and the first appliance information to the notification management device, and transmitting, by the second terminal, a received signal strength of the beacon at the second terminal, the second terminal information related to the second terminal, and the first appliance information to the notification management device; and
transmitting, by the notification management device, a notification signal including activation information of the remote controller, to only one of the first terminal and the second terminal that has a higher received signal strength of the beacon,
wherein the appliance identification information includes the first appliance information.

9. A program for causing a computer to execute the remote control method according to claim 8.
